# FASCICULE DE BREVET EUROPEEN

(11) **EP 2 075 960 B1**
(45) Date de publication et mention de la délivrance du brevet: **15.06.2011**
(21) Numéro de dépôt: 08291245.2
(22) Date de dépôt: 29.12.2008
(51) Int. Cl.: H04L 12/56, H04L 1/00

(54) **Système et procédé d'adaptation des flux de contenu vidéo à la variabilité des conditions de transmission d'un réseau radiotéléphonique et à la dynamique du contenu de la source vidéo**
System und Verfahren zur Adaptation von Videoinhalten an die Variabilität der Übertragungsbedingungen in einem Funknetz und an die Dynamik des Inhalts der Videoquelle
System and method of adapting video content streams to variable transmission conditions in a radiotelephone network and to the dynamics of the video source content

(30) Priorité: 31.12.2007 FR 0709183
(43) Date de publication de la demande: 01.07.2009
(73) Titulaire: Societé Française du Radiotéléphone, 75008 Paris (FR)
(72) Inventeur: Lehembre, Bernard, 78390 Bois d'Arcy (FR)
(74) Mandataire: Debay, Yves

(56) Documents cités:
- EP-A- 1 233 622
- EP-A- 1 580 914
- WO-A-2007/014384
- US-A1- 2002 094 031
- 3GPP ET AL: "Improved Session Setup and Bandwidth Adaptation" 3GPP TSG-SA WG4 MEETING #18, XX, XX, 3 septembre 2001 (2001-09-03), pages 1-5, XP002343674

## Description

La présente invention concerne un système d'adaptation des flux de contenu vidéo à la variabilité des conditions de transmission d'un réseau radioélectrique de téléphonie mobile, le procédé mis en oeuvre par le système d'adaptation et le mobile permettant son utilisation dans un tel système.

L'invention présente un intérêt particulier dans l'utilisation des mobiles pour la réception d'images vidéo en lecture en continu (streaming) fournies par un fournisseur de contenu vidéo. La lecture en continu, également couramment appelée « streaming », est un principe utilisé principalement pour l'envoi de contenu en « direct » (ou en léger différé). Très utilisée sur Internet, elle permet la lecture d'un flux audio ou vidéo, à mesure qu'il est diffusé. Elle s'oppose ainsi à la diffusion par téléchargement qui nécessite de récupérer l'ensemble des données d'un morceau ou d'un extrait vidéo avant de pouvoir l'écouter ou le regarder.

Un des problèmes qui se pose fréquemment dans la transmission de contenus vidéo en continu à un mobile est lié à la variation de débit disponible sur le canal radio utilisé pour la transmission des images vidéo.

Un premier exemple propre à ce premier inconvénient est le cas de l'utilisateur qui initialement recevait un flux vidéo de 200 Kbit/s dans de bonnes conditions de réception pénètre dans un immeuble, ce qui occasionne une atténuation du signal radio qui entraîne, de par les mécanismes réseau, une bande passante allouée réduite pour conserver la connexion, le débit en réception pouvant alors passer à 100 Kbit/s voire moins. Le débit vidéo du serveur de 200 Kbit/s n'ayant pas changé va occasionner un engorgement du réseau et du buffer (mémoire tampon) du terminal entraînant rapidement une perte d'images et un arrêt de la séquence vidéo reçue.

Un autre inconvénient est lié également à la variabilité de la transmission des ondes radio. Du fait de cette variabilité, des paquets d'images vidéo transmis seront reçus entachés d'erreurs par le mobile et nécessiteront des répétitions, le plus fréquemment sur le sous-système radio lui-même, c'est-à-dire entre la station de base ou son contrôleur et le terminal. Tant que les conditions de réception radio resteront mauvaises, ces paquets non acquittés par le terminal resteront mémorisés dans le réseau et périodiquement réémis vers le terminal jusqu'à atteindre soit, un nombre de répétitions maximum soit, un temps limite appelé « time out » au-delà desquels les paquets non acquittés seront définitivement abandonnés entraînant une perte de paquets au terminal et une dégradation de la qualité de la séquence vidéo affichée. Dans les systèmes radio mobiles actuels tels que l'UMTS aucun mécanisme d'anticipation de situation de crise telle qu'expliquée ci-dessus n'est opérationnel ce qui entraîne, par la non-adaptation du débit vidéo émis du serveur, un engorgement du réseau.

Un autre inconvénient peut être lié au partage d'une ressource radio commune dont la bande passante est par nature limitée par un nombre croissant d'utilisateurs. Un exemple est donné par la fonction HSDPA (High Speed Downlink Packet Access) du standard UMTS. Ce canal est commun donc partagé par les utilisateurs de la cellule radio. Sa bande passante dépend de nombreux paramètres, elle peut être variable dans le temps mais en tout état de cause elle reste limitée. En prenant pour illustrer un débit maximal de 300 Kilobits/seconde sur ce canal, il pourra être supporté deux utilisateurs dont le débit vidéo est fixé à 128 Kbit/s mais ce dernier sera incapable d'en supporter davantage avec le même débit. Or la technologie HSDPA ne permet pas pour l'instant de limiter le nombre d'utilisateurs de ce type admis à se connecter à ce canal commun. En conséquence, le débit reçu par chaque utilisateur sera réduit arbitrairement soit 100 Kbit/s pour trois ou 75 Kbit/s pour quatre. Le débit de la source n'ayant pas varié (128 Kbit/s), il y aura, également dans ce cas, engorgement du réseau, perte de paquets et dégradation de la qualité de la séquence vidéo reçue affichée par le terminal.

Le document XP 002343674 de la 8^{ème} rencontre 3GPP TSG-SA WG4 des 3-7 septembre 2001 décrit un système permettant d'utiliser un réseau UMTS pour les services de lecture en continu en tentant d'éliminer un ou plusieurs inconvénients. Cependant, ce système ne peut être appliqué à tout type de réseaux et tout type d'encodage. En outre, il ne résout pas le problème qu'il peut exister lors d'une variation de débit de la source vidéo au cours de la réception d'un flux vidéo.

Le document WO 2007/014384 A2 tente de résoudre le problème en proposant un système qui permet de multiplexer des programmes différents sur un même canal en adaptant pour chaque programme le débit instantané de chaque encodeur. Le nombre d'encodeurs est égal au nombre de programmes multiplié par le nombre de canaux. Il est donc évident que ce système ne peut s'appliquer qu'à des réseaux de diffusion où le canal est unique qu'à des réseaux mobiles où cette solution devient ingérable à cause du nombre important de canaux nécessaires.

Le document EP 1 580 914 A1 propose un système et un procédé permettant de contrôler un flux d'information fourni à un utilisateur par l'intermédiaire d'une liaison exposée à des conditions de fonctionnement variables. Pour cela, le système comprend un module de contrôleur configuré pour surveiller les conditions de fonctionnement de la liaison et un transcodeur configuré pour transcoder sélectivement un ou plusieurs paramètres de transcodage en fonction des conditions de fonctionnement surveillées. Or, cette invention est adaptée aux réseaux locaux sans fil (WLAN) et n'est pas adaptable à un réseau UMTS par exemple.

Un premier but de l'invention est de proposer un système qui permette de supprimer les inconvénients cités plus haut en adaptant en temps réel les flux de contenu vidéo à la variabilité des conditions de transmission du réseau radiotéléphonique.

Ce but est atteint par le fait que le système d'adaptation des flux de contenu vidéo à variabilité des conditions de transmission du réseau radioélectrique de téléphonie mobile selon la revendication 1.

Ce dernier point est applicable en particulier pour tout codage vidéo à débit variable ou VBR (Variable Bit Rate) de plus en plus utilisé en diffusion vidéo en opposition au codage à débit constant ou CBR (Code Bit Rate).

Les revendications 2 à 11 et 13 présentent d'autres caractéristiques du système.

Un autre but est de proposer un procédé mis en oeuvre par le système.

Ce but est atteint par le procédé d'adaptation des flux de contenu vidéo à la variabilité de transmission des réseaux radioélectriques de radiotéléphonie selon la revendication 12.

Un autre but est de proposer un mobile utilisable par le système selon la revendication 1 et permettant la mise en oeuvre du procédé selon la revendication 12.

D'autres particularités et avantages de la présente invention apparaîtront plus clairement à la lecture de la description ci-après faite en référence aux dessins annexés, représentatifs d'un exemple de réalisation non limitatif de l'invention, dans lesquels :
- la figure 1 représente un système permettant la mise en oeuvre du procédé d'adaptation des flux vidéo dans un réseau de transmission radiotéléphonique ;
- la figure 2 représente les informations de numérotation de paquets connues du serveur côté source et destination entre deux rapports RTCP et permettant d'instruire l'algorithme du serveur pour permettre la décision de commutation ;
- la figure 3 représente les calculs effectués par l'algorithme de détermination du flux source optimal qui désignera les commutations à réaliser;
- la figure 4 représente le résultat du flux vidéo envoyé par le serveur en fonction des calculs effectués par l'algorithme de commutation et des informations fournies à cet algorithme
- la figure 5 représente schématiquement, en fonction des variations du signal radio, l'adaptation du flux vidéo à ces variations.

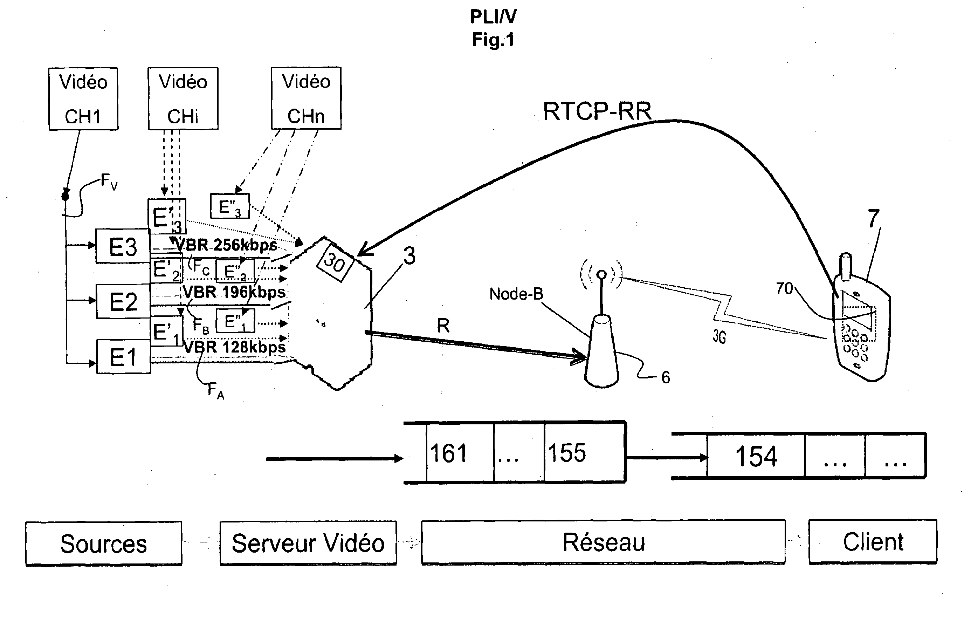

Le diagramme de fonctionnement général est représenté figure 1. Y sont représentés des sources vidéo appartenant, par exemple, à plusieurs fournisseurs de contenus vidéo, un premier fournisseur (CH1), un autre fournisseur (CHi) et un dernier fournisseur (CHn). Chacun des flux de ces contenus vidéo peuvent être demandés par un utilisateur d'un téléphone mobile (7). Ce téléphone mobile (7) reçoit un des flux vidéo encodé et compressé par un ensemble de codeurs à débits différentiés pour chaque contenu. La transmission radiotéléphonique correspondant par exemple à la norme UMTS et son extension HSDPA ou "3G plus", les ondes radio sont émises par des émetteurs (6) dits "Node B", lesquels reçoivent le flux vidéo résultant du traitement effectué par un serveur (3). Le serveur (3) reçoit, pour le flux vidéo (F_{V}) fourni par le fournisseur de contenu (CH1) une pluralité de flux vidéo encodés et compressés (F_{A}, F_{B}, F_{C}), par exemple, trois flux vidéo, à des débits différents par une pluralité d'encodeurs (E1, E2, E3), par exemple, trois encodeurs.

Le serveur (3) reçoit également pour un autre fournisseur de contenu vidéo (CHi) une autre pluralité de flux vidéo encodés à des débits vidéo différents par une autre pluralité d'encodeurs (E'3, E'2, E'1).

Enfin le serveur (3) peut recevoir, pour le fournisseur de contenu (CHn) une autre pluralité de flux de débit différents encodés par une autre pluralité d'encodeurs (E"3, E"2, E"1).

Comme exemple et par mesure de simplification, les premiers encodeurs (E1, E'1, E"1) fournissent des signaux compressés à un débit vidéo de l'ordre de 128 Kilobit/s proche du débit minimal acceptable pour une qualité minimale de l'image restituée par le mobile. Les seconds encodeurs (E2, E'2, E"2) fournissent un débit vidéo intermédiaire de l'ordre de 192 Kilobit/s et les troisièmes encodeurs (E3, E'3, E"3) fournissent un débit vidéo proche du débit maximal du réseau radio de l'ordre de 256 Kilobits par seconde. L'exemple ci-dessus n'est pas limitatif et le nombre ainsi que l'incrément de débit entre les encodeurs peuvent bien entendu être modifiés.

Lorsque l'utilisateur du mobile (7) choisit le contenu vidéo correspondant à la chaîne (CH1), les encodeurs (E1, E2, E3) émettant leur flux respectifs (F_{A}, F_{B}, F_{c}) en direction du serveur, le serveur (3) va commuter son circuit d'émission radio sur l'un de ces trois flux en fonction des possibilités du terminal sans tenir compte des conditions de variabilité de la transmission du réseau radiotéléphonique a priori.

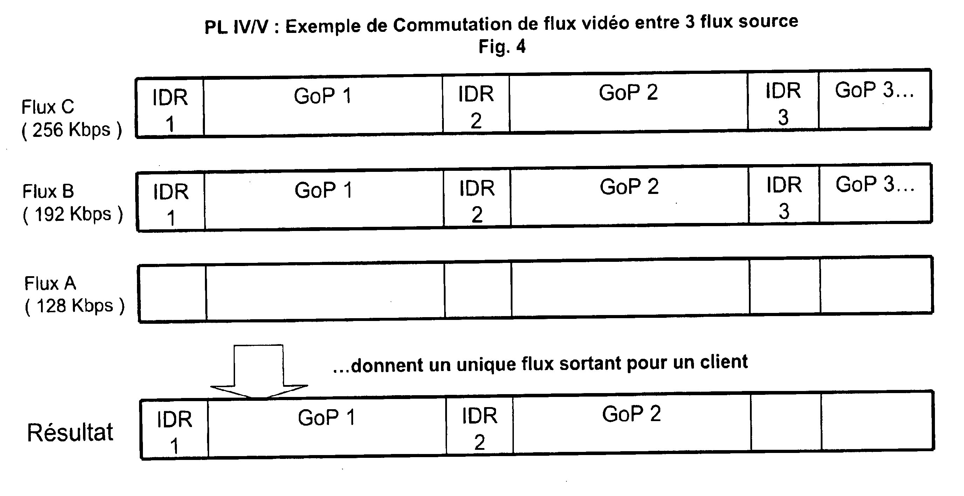

Ainsi, comme représenté sur la figure 4, le flux (F_{C}) correspond au débit le plus élevé, de 256 Kilobit/s, le flux (F_{B}) correspond au débit intermédiaire de 192 Kilobit/s, le flux (F_{A}) correspond au débit le plus bas de 128 Kilobit/s.

En fonction des conditions de transmission radio en supposant que celles-ci se dégradent pour un utilisateur donné ou que le nombre d'utilisateurs vidéo croît à ressources radio disponibles constantes, le serveur, comme représenté par la ligne (résultat R de la figure 4), va transmettre, par exemple, pendant un certain temps le premier flux (F_{C}) à 256 Kilobit/s, puis pendant l'intervalle de temps suivant le second flux (F_{B}) à 192 Kilobit/s par seconde et pendant l'intervalle suivant le troisième flux (F_{A}) à 128 Kilobit/s par seconde.

Les commutations d'un flux (par exemple, F_{C}) à un autre (F_{A} ou F_{B}) de débit différent s'effectuent toujours sur les images de référence (IDR) d'un flux vidéo. On rappellera que les images de référence IDR dans un flux vidéo sont celles qui n'ont pas de dépendance temporelle vis-à-vis des autres et permettent donc d'assurer un point de synchronisation entre flux.

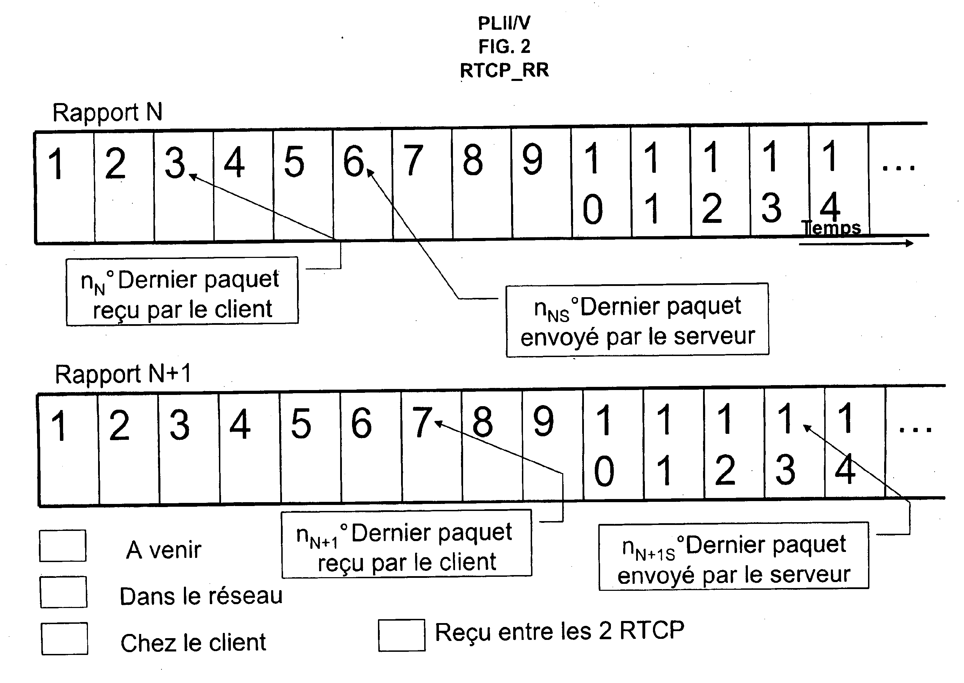

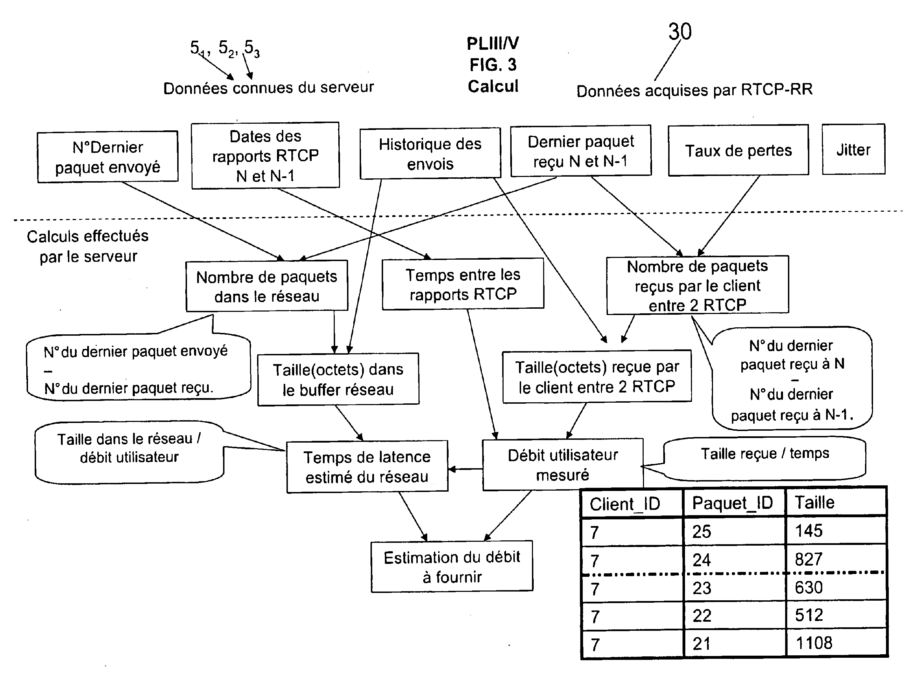

La commutation effectuée par le serveur (3), entre les différents flux, pour transmettre sur les réseaux l'un des flux fournis (F_{A}, F_{B}, F_{C}) par un des encodeurs (E, E', E") du fournisseur de contenu va maintenant être explicitée à l'aide des figures 2 et 3.

De manière avantageuse, les premiers paramètres, liés à la capacité de transmission du canal radio sont basés sur une estimation du seuil de congestion du réseau.

En référence à la figure 3, cette estimation est réalisée d'une part, à partir du débit utilisateur mesuré à partir des éléments fournis par le terminal dans les rapports RTCP. Cette autre particularité s'appuie sur la taille en octets reçus correctement sans erreur par le client (le terminal mobile) entre deux rapports RTCP. Le serveur conserve un historique de tous les paquets envoyés dans le réseau avec, par client, une liste des numéros des paquets émis et de leur taille en octets, cet historique par client et mis à jour en temps réel et constitue une autre particularité du système. La taille en octets reçus est calculée par le serveur en fonction des numéros (Paquet_ID) du dernier paquet RTP bien reçu par le client indiqués dans chaque rapport RTCP consécutif, ici N-1 et N, et de leur taille respective fournie par cet historique. Les paquets RTCP étant marqués temporellement, leur périodicité est donc connue du serveur, le débit utilisateur mesuré se résumant alors à une simple division faite par le serveur entre la taille en nombre d'octets reçus par le client et le temps séparant deux rapports RTCP.

Cette estimation est réalisée d'autre part, en estimant le temps de latence du réseau. Cette autre particularité s'appuie sur le fait que, par la numérotation connue du serveur des paquets envoyés dans le réseau et du dernier paquet reçu par le client, le nombre de paquets et donc la taille en octets mémorisée par le réseau (buffer réseau, le réseau se comportant comme un buffer) est directement déductible. Le temps de latence estimé du réseau est donc la simple division de la taille instantanée de ce buffer réseau divisé par le débit utilisateur calculé ci-dessus.

Le seuil de congestion réseau n'est pas connu a priori d'autant qu'il est constamment variable dans le temps en fonction du nombre d'utilisateurs instantanés connectés et de leurs conditions radio respectives et très fluctuantes. Un des indicateurs pourrait être la gigue (jitter), remontée par RTCP. Par expérience cette information a été jugée insuffisante et n'est pas mise en oeuvre dans la suite, la méthode de quantité d'information mémorisée dans le réseau étant jugée beaucoup plus précise.

Ce seuil peut cependant être déterminé par approches successives qui constituent une autre particularité du système et s'effectuent de la façon suivante.

En référence à la figure 3, l'estimation du débit à fournir au client est déduite de l'étape précédente à savoir du temps de latence estimé du réseau et du débit utilisateur mesuré.

Lorsque l'état de congestion est atteint le débit maximal du codeur vidéo possible sans dégradation est le débit mesuré par le client.

Lorsque l'état de congestion n'est pas atteint, le débit maximal du codeur est égal au débit mesuré plus le delta. En effet sans congestion, on estime que le réseau est capable de supporter un débit supérieur au débit du codeur courant ce qui permet d'augmenter la qualité de la vidéo perçue par l'utilisateur. Cette particularité de recherche de l'état de congestion sans atteindre de dégradations perceptibles par l'utilisateur permet d'offrir la meilleure qualité vidéo possible tout en optimisant les ressources radio disponibles, en d'autres termes, on remplit le réseau lorsqu'il le permet en augmentant le débit vidéo envoyé et on réduit fortement ces débits quand l'état de congestion se fait sentir par augmentation importante du temps de latence du réseau et du taux de pertes fourni par le client.

Le calcul du débit source optimal correspond au débit maximum possible diminué de la quantité de données encore mémorisées dans le réseau afin d'éviter un cumul de congestion.

Ce débit optimal ne correspond pas nécessairement aux débits exacts fournis en sortie par l'ensemble des codeurs.

L'autre but du système est précisément de sélectionner le meilleur codeur possible aussi bien en cas de congestion qu'en cas de décongestion comme expliqué plus haut. Ce choix qui constitue une autre particularité du système est réalisé de la manière suivante.

Le second paramètre important dont il faut tenir compte est la variabilité du flux du contenu vidéo lui-même qui peut être très importante en fonction de la dynamique de la scène filmée (cas du sport notamment). Un codage vidéo se présente toujours sous la forme de groupes d'images ou GOP (Group of Pictures). Ces groupes sont constitués d'une image de référence notée IDR qui ne contient pas de dépendance temporelle avec les autres images du groupe, autrement dit elle est codée en éliminant les redondances entre pixels de cette image uniquement (donc selon deux axes) et non pas entre images (selon 3 axes) ce qui est le cas des images non IDR appartenant à ce groupe. Les images IDR sont d'un poids en octets nettement supérieur aux autres et ont une périodicité paramétrable au codage d'environ une seconde.

Compte tenu de la dynamique des débits instantanés image par image, il s'agit pour le dispositif de commutation de calculer un débit moyen de chaque sortie de codeur en effectuant une moyenne sur un GOP, la taille des paquets donc des images est connue du serveur de même que les identifiants IDR des images de référence. On obtient donc un débit moyen de la source Ds0 à DsN, si N est le nombre de codeurs vidéo.

Le flux i du codec choisi correspondra au Dsi qui sera le plus proche du débit optimal obtenu précédemment en fonction des conditions du réseau.

Lorsque ce choix est effectué, il s'agit de commuter le serveur vers le codec sélectionné, si possible, sans perte d'image. Cette commutation qui représente une autre particularité du système est effectuée sur des images de références IDR qui n'ayant pas de dépendance temporelle sur les autres images d'un GOP permettent donc de garder cette synchronisation entre flux. Pour un groupe de codeurs donné, il est entendu qu'il est facile de les synchroniser entre eux pour obtenir des images IDR en phase entre flux d'une même séquence vidéo comme représenté à la figure 4 (ici N = 3).

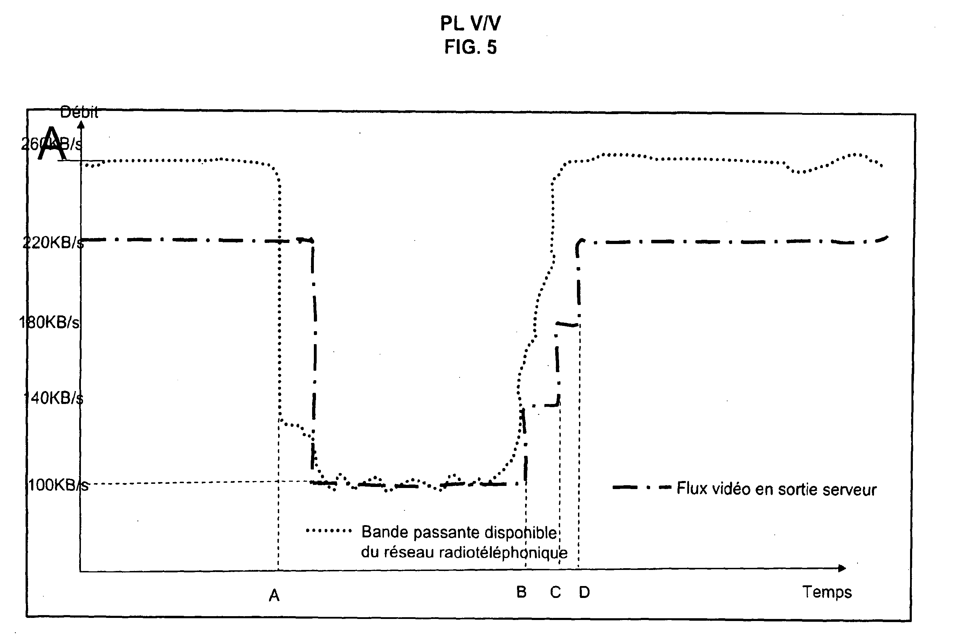

Enfin, la figure 5 permet de voir un exemple des conséquences des fluctuations de transmission du réseau de radiotéléphonie qui peuvent passer, dans certaines circonstances, d'un débit de 260 Kilobits par seconde à un débit de 100 Kilobits par seconde, ou même en dessous de ce débit, sur la commutation des flux vidéo.

En dessous d'un débit de 100 Kilobits par seconde, la transmission des images vidéo n'est plus possible avec une qualité acceptable, il a donc été supposé que la transmission réseau ne passait pas en dessous des 100 Kilobits par seconde.

Dans l'exemple de la figure 5, le flux vidéo correspondant au contenu d'un fournisseur peut être encodé sous forme de quatre flux. Un premier flux à 100 Kilobits, un deuxième flux à 140 Kilobits, un troisième flux à 180 Kilobits et un quatrième flux à 220 Kilobits. Lorsque le réseau téléphonique a une capacité maximale de transmission, on utilise le débit le plus élevé, 220 Kilobits par seconde. Lorsque la capacité de transmission du réseau au point A chute à 100 Kilobits par seconde, le serveur commute automatiquement, après avoir refait l'estimation du débit à fournir comme expliqué précédemment, sur le flux encodé correspondant au débit le plus proche et inférieur au débit à fournir, en l'occurrence le plus faible ici, soit 100 Kilobit/s. Puis le débit de transmission réseau au point B remontant progressivement jusqu'à la valeur maximale initiale, le serveur va commuter progressivement au flux de 140 Kilobit/s, puis au point C, sur le flux de 180 Kilobit/s pour enfin arriver au point D à commuter sur le flux de 220 Kilobit/s, chaque commutation s'effectuant sur l'image de référence IDR. Le temps de commutation entre deux flux sera égal au temps séparant deux images de référence, c'est-à-dire de l'ordre d'une seconde.

Ainsi, on peut comprendre que grâce, d'une part, à la capacité du mobile d'émettre ces rapports (RTCP-RR) en retour selon le protocole RTCP vers le serveur, d'autre part, à la capacité du serveur d'utiliser ces informations et les informations délivrées par les flux vidéo, le serveur par son logiciel va décider de commuter entre les flux de différents débits pour adapter le flux délivré au réseau de radiotéléphonie en fonction des conditions de réception pour l'utilisateur.

L'exemple figuré avec trois encodeurs n'est pas limitatif, bien évidemment, le nombre d'encodeurs peut être augmenté et adapté en fonction des débits maxima des réseaux de radiotéléphonie et minima acceptables pour permettre de visualiser une image correcte sur le mobile.

Dans d'autres variantes, il est possible de faire varier le nombre d'encodeurs en fonction de l'incrément souhaité entre chaque débit ainsi pour des flux compris entre 100 et 300 kilobit/s avec un incrément de débit de 50, il faut avoir cinq encodeurs par contenu vidéo. Dans le cas de l'opérateur SFR qui met à disposition actuellement 80 chaînes, le nombre total d'encodeurs pour un incrément de débit de 50 sera limité à 400. Ainsi, avec 400 encodeurs, SFR peut améliorer grandement la qualité de lecture en continu de contenus vidéo par les mobiles du réseau sans avoir à faire une adaptation en temps réel des flux encodés, ce qui nécessiterait d'avoir autant d'encodeurs que d'utilisateurs de la vidéo sur son réseau.

Il est bien évident que les modes de réalisation représentés sont indiqués à titre purement indicatif et tout mode de réalisation entrant dans le cadre des revendications fait également partie de l'invention.

## Revendications

1. Système d'adaptation des flux de contenu vidéo à variabilité des conditions de transmission du réseau radioélectrique de téléphonie mobile **caractérisé en ce qu'**il comporte :
- une source comportant au moins un dispositif (CH1, ..., CHn) fournisseur de contenu vidéo à des débits supérieurs au débit maximum admissible par le réseau de radiotéléphonie ou les terminaux susceptibles d'y être connectés ;
- une pluralité de dispositifs encodeurs (E1, E2, E3, E', E") des flux vidéo du fournisseur de contenu vidéo pour compresser le flux vidéo en une pluralité de flux compressés à des débits différents inférieurs au débit initial et délivrés à un serveur (3) d'émission sur le réseau de radiotéléphonie ;
- un dispositif de commutation automatique du serveur (3) permettant la commutation, entre les différents flux compressés à des débits différents, l'estimation de la commutation étant effectuée en fonction de deux types de paramètres, les premiers liés à la capacité de transmission du canal radio en temps réel et les seconds liés à la variabilité du débit de la source vidéo.

2. Système selon la revendication 1, **caractérisé en ce que**, les premiers paramètres, liés à la capacité de transmission du canal radio, sont une estimation du débit à fournir basée sur le nombre de paquets accumulés dans le réseau et non encore délivrés au terminal, une variation à la hausse comme à la baisse de cette accumulation permettant de détecter un état de congestion ou de décongestion du réseau, toute saturation se manifestant par un nombre de paquets perdus important remontés dans des rapports RTCP.

3. Système selon la revendication 1, **caractérisé en ce que**, les seconds paramètres, liés à la source vidéo, sont le nombre de fournisseurs de contenu vidéo que l'on souhaite transmettre sur le réseau de radiotéléphonie, la granularité des débits de chaque contenu vidéo et la granularité temporelle des commutations, par exemple, la durée des groupes (GoPi) basée sur la périodicité entre images IDR.

4. Système selon une des revendications 1 à 3, **caractérisé en ce que** l'estimation de la commutation est effectuée en fonction des informations renvoyées par le mobile (7) vers le serveur (3) au travers d'un canal (RTCP-RR) de transmission de rapports.

5. Système selon la revendication 4, **caractérisé en ce que** le canal est un canal de transmission de rapport RTCP (Real Time Control Protocol) de granularité définie (de préférence 2 secondes).

6. Système selon une des revendications 1 à 5, **caractérisé en ce que** les informations renvoyées par le mobile permettent à un algorithme (30) du serveur de calculer le débit reçu par le client.

7. Système selon une des revendications précédentes, **caractérisé en ce que** les informations représentatives des paquets envoyés et les informations renvoyées par le mobile étant représentatives des paquets reçus, le serveur (3) calcule l'accumulation des paquets dans le réseau.

8. Système selon la revendication 7, **caractérisé en ce que** le résultat de ce dernier calcul permet au serveur de diminuer ou d'augmenter le débit optimal à fournir et de commuter sur un flux de débit différent.

9. Système selon la revendication 8, **caractérisé en ce que** la commutation d'un flux de débit donné à un flux d'un autre débit s'effectue toujours sur les points de synchronisation des images de référence (IdR) d'un flux d'image (Fv).

10. Système selon une des revendications précédentes, **caractérisé en ce que** le serveur gère n · m commutations en fonction du nombre m de fournisseurs de contenu vidéo accessibles sur les services de l'opérateur et de n flux encodés (E, E', E") commutables pour chaque fournisseur du contenu vidéo.

11. Système selon la revendication 1 ou 8 ou 9 ou 10, **caractérisé en ce que** les flux encodés ont chacun un débit inférieur au débit maximum admissible par le canal radio du réseau de radiotéléphonie et supérieur à un débit minimal en deçà duquel l'image est trop dégradée.

12. Procédé mis en oeuvre par le système **caractérisé en ce que** le procédé d'adaptation des flux de contenu vidéo à la variabilité de transmission des réseaux radioélectriques de radiotéléphonie, **caractérisé en ce qu'**il comporte :
- une étape de réception de rapports RTCP d'un utilisateur du service vidéo sur le réseau de radiotéléphonie ;
- une étape de réception d'informations représentatives de la densité d'informations du contenu vidéo du nombre de paquets vidéo envoyés ;
- une étape de détermination du flux vidéo sortant d'un encodeur parmi une pluralité d'encodeurs sur lequel les moyens de transmission du serveur peuvent commuter.

13. Mobile utilisable par le système selon la revendication 1 et permettant la mise en oeuvre du procédé selon la revendication 12 **caractérisé en ce que** le mobile comporte des moyens (70) d'élaborer un rapport RTCP à destination du serveur d'adaptation des flux de contenu vidéo, ces rapports RTCP successifs notés N et N-1 incorporant des informations concernant le numéro du dernier paquet RTP reçu, le taux de perte paquet depuis le précédent rapport RTCP et le jitter moyen.

## Claims

1. A system for adapting video content flows with variability of the transmission conditions of the mobile telephone radioelectric network **characterized in that** it includes:
- a source including at least one device (CH1, ..., CHn) providing video contents with throughputs greater than the maximum admissible throughputs by the radiotelephone network or the terminals capable of being connected thereto;
- a plurality of encoding devices (E1, E2, E3, E', E") for the video flows of the video content provider for compressing the video flow into a plurality of compressed flows at different throughputs less than the initial throughput and delivered to a broadcasting server (3) on the radiotelephone network;
- a device for automatically switching the server (3) allowing switching between the different compressed flows at different throughputs, the estimation of the switching being carried out depending on two types of parameters, the first related to the transmission capacity of the radio channel in real time and the second related to the variability of the throughput of the video source.

2. The system according to claim 1, **characterized in that** the first parameters, related to the transmission capacity of the radio channel, are an estimation of the throughputs to be provided based on the number of accumulated packets in the network and not yet delivered to the terminal, a both upward and downward variation of this accumulation allowing detection of a congestion or decongestion state of the network, any saturation being demonstrated by a significant number of lost packets returned in RTCP reports.

3. The system according to claim 1, **characterized in that** the second parameters, related to the video source, are the number of providers of video contents which one desires to transmit on the radiotelephone network, the granularity of the throughputs on each video contents and the time granularity of the switchings, for example the duration of the groups (GoPi) based on the periodicity between IDR images.

4. The system according to one of claims 1 to 3, **characterized in that** the estimation of the switching is carried out depending on the information sent back by the mobile (7) to the server (3) through a report transmission channel (RTCP-RR).

5. The system according to claim 4, **characterized in that** the channel is a report transmission channel RTCP (Real Time Control Protocol) with defined granularity (preferably 2 seconds).

6. The system according to one of claims 1 to 5, **characterized in that** with the information sent back by the mobile, an algorithm (30) of the server may calculate the throughput received by the client.

7. The system according to one of the preceding claims, **characterized in that** as the information representative of the sent packets and the information sent back by the mobile are representative of the received packets, the server (3) calculates the accumulation of the packets in the network,

8. The system according to claim 7, **characterized in that** the result of this last calculation allows the server to decrease or increase the optimum throughput to be provided and to switch to a flow of different throughput.

9. The system according to claim 8, **characterized in that** the switching from a given throughput flow to a flow of another throughput is always carried out on the synchronization points of the reference images (IDR) of an image flow (Fv).

10. The system according to one of the preceding claims, **characterized in that** the server manages n-m switchings depending on the number m of video content providers accessible on the services of the operator and on n encoded flows (E, E', E") switchable for each provider of the video content.

11. The system according to claim 1 or 8 or 9 or 10, **characterized in that** the encoded flows each have a throughput of less than the maximum throughput admissible by the radio channel of the video telephone network and of greater than a minimum throughput below which the image is too degraded.

12. A method applied by the system **characterized in that** the method for adapting video content flows to the transmission variability of radioelectric radio telephone networks is **characterized in that** it includes:
- a step for receiving RTCP reports from a user of the video service on the radio telephone network;
- a step for receiving information representative of the information density of the video content of the number of sent video packets;
- a step for determining the video flow leaving an encoder among a plurality of encoders to which the transmission means of the server may switch.

13. A mobile which may be used by the system according to claim 1 and allowing the application of the method according to claim 12 **characterized in that** the mobile includes means (70) for elaborating an RTCP report to the server for adapting the video content flows, these successive RTCP reports noted as N and N-1 incorporating information concerning the number of the last received RTP packet, the packet loss rate since the preceding RTCP report and the average jitter.

## Patentansprüche

1. System zur Anpassung der Videoinhaltsflüsse an die Variabilität der Übertragungsbedingungen des radioelektrischen Mobiltelefonienetzes, **dadurch gekennzeichnet, dass** es aufweist:
- eine Quelle, die mindestens eine Vorrichtung (CH1, ..., CHn) aufweist, die Videoinhalt in Übertragungsraten liefert, die höher sind als die maximale, vom Radiotelefonienetz oder den Endgeräten, die dort verbunden sein könnten, zulässige maximale Übertragungsrate sind,
- eine Vielzahl von Codiervorrichtungen (E1, E2, E3, E', E") der Videoflüsse des Lieferanten von Videoinhalt, um den Videofluss in eine Vielzahl komprimierter Flüsse mit verschiedenen Übertragungsraten zu komprimieren, die kleiner sind als die ursprüngliche Übertragungsrate und einem Sendeserver (3) über das Radiotelefonienetz geliefert werden,
- eine automatische Vermittlungsvorrichtung des Servers (3), die die Vermittlung zwischen den verschiedenen komprimierten Flüssen mit verschiedenen Übertragungsraten erlaubt, wobei die Beurteilung der Vermittlung in Abhängigkeit von zwei Parameterarten erfolgt, wobei die ersten mit der Übertragungskapazität des Radiokanals in Echtzeit verbunden sind und die zweiten mit der Variabilität des Durchsatzes der Videoquelle verbunden sind.

2. System nach Anspruch 1, **dadurch gekennzeichnet, dass** die ersten Parameter, die mit der Übertragungskapazität des Radiokanals verbunden sind, eine Beurteilung der zu liefernden Übertragungsrate sind, die auf der Anzahl der im Netz angehäuften und noch nicht an das Endgerät ausgelieferten Pakete basiert, wobei eine Änderung in Richtung Erhöhung beziehungsweise Verringerung dieser Akkumulierung erlaubt, einen Zustand der Verstopfung beziehungsweise der Entstauung des Netzes zu ermitteln, wobei sich jede Sättigung durch eine erhebliche Anzahl verlorener Pakete in RTCP-Protokollen ausdrückt.

3. System nach Anspruch 1, **dadurch gekennzeichnet, dass** die zweiten Parameter, die mit der Videoquelle verbunden sind, die Anzahl der Lieferanten von Videoinhalt sind, die man über das Radiotelefonienetz übertragen möchte, die Granularität der Übertragungsraten jedes Videoinhalts und die temporäre Granularität der Vermittlungen, zum Beispiel die Dauer der Gruppen (GoPi) auf der Basis der Periodizität zwischen IDR-Bildern.

4. System nach einem der Anspruch 1 bis 3, **dadurch gekennzeichnet, dass** die Beurteilung der Vermittlung in Abhängigkeit von den vom Mobiltelefon (7) über einen Protokollübertragungskanal (RTCP-RR) zum Server (3) zurückgeschickten Informationen erfolgt.

5. System nach Anspruch 4, **dadurch gekennzeichnet dass** der Kanal ein RTCP-Übertragungskanal (RealTime Control Protocol) mit einer bestimmten Granularität (vorzugsweise 2 Sekunden) ist.

6. System nach einem der Anspruch 1 bis 5, **dadurch gekennzeichnet, dass** die vom Mobiltelefon zurückgeschickten Informationen einem Algorithmus (30) des Servers erlauben, die vom Client erhaltene Übertragungsrate zu berechnen.

7. System nach einem der vorangehenden Ansprüche, **dadurch gekennzeichnet, dass** der Server (3) die Akkumulierung der Pakete im Netz berechnet, wobei die für die geschickten Pakete repräsentativen Informationen und die vom Mobiltelefon zurückgeschickten Informationen für die erhaltenen Pakete repräsentativ sind.

8. System nach Anspruch 7, **dadurch gekennzeichnet, dass** das Ergebnis dieser letzten Berechnung dem Server erlaubt, die zu liefernde optimale Übertragungsrate zu verringern oder zu erhöhen und über einen anderen Übertragungsratenfluss zu vermitteln.

9. System nach Anspruch 8, **dadurch gekennzeichnet, dass** die Vermittlung eines bestimmten Übertragungsratenflusses an einen Fluss einer anderen Übertragungsrate immer über Referenzbildsynchronisationspunkte (IdR) eines Bildflusses (Fv) erfolgt.

10. System nach einem der vorangehenden Ansprüche, **dadurch** gekenntzeichnet, dass der Server in Abhängigkeit von der Anzahl m von Videoinhaltslieferanten, die auf den Diensten des Providers zugänglich sind, und von n codierten Flüssen (E, E' E"), die für jeden Lieferanten des Videoinhalts vermittelbar sind, n-m Vermittlungen generiert.

11. System nach Anspruch 1 oder 8 oder 9 oder 10, **dadurch gekennzeichnet, dass** jeder codierte Fluss eine Übertragungsrate hat, die kleiner ist als die maximale, vom Radiokanal des Radiotelefonienetzes zulässige Übertragungsrate und größer als eine minimale Übertragungsrate, jenseits der das Bild zu schlecht ist.

12. Von dem System umgesetztes Verfahren, **dadurch gekennzeichnet, dass** das Verfahren zu Anpassung der Videoinhaltsflüsse an die Variabilität der radioelektrischen Radiotelefonienetze umfasst:
- einen Schritt des Empfangs von RTCP-Protokollen eines Benutzers des Videodiensts über das Radiotelefonienetz,
- einen Schritt des Empfangs von Informationen, die für die Informationsdichte des Videoinhalts der Anzahl der geschickten Videopakete repräsentativ sind,
- einen Schritt der Bestimmung des Videoflusses, der einen Codierer unter einer Vielzahl von Codierern verlässt, über den die Übertragungsmittel des Servers vermitteln können.

13. Von dem System nach Anspruch 1 verwendbares Mobiltelefon, das die Umsetzung des Verfahrens nach Anspruch 12 erlaubt, **dadurch gekennzeichnet, dass** das Mobiltelefon Mittel (70) aufweist, um ein RTCP-Protokoll in Richtung des Servers zur Anpassung der Videoinhaltsflüsse zu erstellen, wobei diese aufeinanderfolgenden RTCPs N und N-1 Informationen über die Nummer des letzten empfangenen RTP-Pakets, die Paketverlustrate seit dem vorhergehenden RTCP-Protokoll und den durchschnittlichen Jitter enthalten.
